Europäisches Patentamt

European Patent Office

Office européen des brevets

(19)

(11) Veröffentlichungsnummer: **0 253 055**
**B1**

# (12) EUROPÄISCHE PATENTSCHRIFT

(45) Veröffentlichungstag der Patentschrift:
27.06.90

(21) Anmeldenummer: 87102778.5

(22) Anmeldetag: 26.02.87

(51) Int. Cl.⁵: **H02B 1/04**

(54) Gehäuse zum Einsetzen in Schalttafeln.

(30) Priorität: 18.07.86 DE 8619379 U

(43) Veröffentlichungstag der Anmeldung:
20.01.88 Patentblatt 88/3

(45) Bekanntmachung des Hinweises auf die Patenterteilung:
27.06.90 Patentblatt 90/26

(84) Benannte Vertragsstaaten:
CH DE FR GB IT LI NL SE

(56) Entgegenhaltungen:
DE-B- 1 066 646
GB-A- 1 112 295
GB-A- 2 167 907

(73) Patentinhaber: bopla Gehäuse Systeme GmbH,
Uhlendieckstrasse 134-140, D-4980 Bünde 1(DE)

(72) Erfinder: Frankowski, G., Uhlendiekstrasse 134,
D-4980 Bünde(DE)

(74) Vertreter: Patentanwälte Dipl.-Ing. Bodo Thielking
Dipl.-Ing. Otto Elbertzhagen, Gadderbaumer Strasse 20,
D-4800 Bielefeld 1(DE)

## Beschreibung

Die Erfindung betrifft ein Gehäuse zum Einsetzen in Ausschnitte von Schalttafeln oder dergleichen, mit einem frontseitigen, zum Übergreifen eines Ausschnitts ausgebildeten Rand, ferner mit seitlich am Gehäuse angesetzten, als Blechteile ausgebildeten Befestigungselementen, die zum Abstützen an der Rückseite der Schalttafel oder dergleichen ausgebildet sind (siehe GB-A 2 167 907 and DE-B 1 066 646).

Bei einem bekannten Schalttafelgehäuse dieser Art, das aus Kunststoff besteht, sind Blechstanzteile mit an der Gehäuseseitenwand vorgesehenen Nieten verrastet. Diese Blechstanzteile tragen einen Mutternbereich, der von einer Gewindespindel durchsetzt wird. Mit Hilfe der Gewindespindel, die sich quer zur Schalttafelebene erstreckt, kann das Gehäuse bei Montage von der Rückseite der Schalttafel im Schalttafelausschnitt fixiert werden.

Es erweist sich als nachteilig bei dem bekannten Gehäuse, daß die Befestigung mit Hilfe von seitlichen Metallstiften zu aufwendig ist.

Außerdem besteht ein weiterer Nachteil darin, daß dieses bekannte Gehäuse nicht zu einem von der Frontseite erfolgenden Einsatz in die Schalttafel geeignet ist.

Der Erfindung liegt demzufolge die Aufgabe zugrunde, ein Gehäuse der als bekannt vorausgesetzten Art so auszubilden, daß es besonders einfach und preisgünstig herstellbar ist und durch Verwendung unterschiedlicher Befestigungselemente am gleichen Gehäusekörper sowohl zur Montage von der Rückseite als auch von der Frontseite der Schalttafel geeignet ist.

Die Lösung dieser Aufgabe erfolgt erfindungsgemäß dadurch, daß die Befestigungselemente geneigt angeordnete, quer zur Frontseite des Gehäuses sich erstreckende Seitenkantenbereiche aufweisen, die entsprechend geneigte, hinterschnittene Bereiche der Gehäuseseitenwand untergreifen und daran fixiert sind.

Dabei erweist es sich als zweckmäßig, daß in den Seitenwänden gegenüber deren Außenkonturen zurückliegende Ausnehmungen zur Aufnahme von Bereichen der Befestigungselemente vorgesehen sind.

Bei einer bevorzugten Ausführungsform liegen diejenigen Bereiche der Befestigungselemente innerhalb der Außenkonturen der Seitenwände, mit denen die Befestigungselemente am Grund der Ausnehmungen anliegen. Nach einem weiteren Vorschlag der Erfindung weisen die Befestigungselemente durch Stege voneinander getrennte, zentrale Durchbrüche auf, die an vom Grund der Ausnehmungen vorstehenden, angeformten Vorsprüngen anliegen.

Bei einer weiteren Ausfihrungsform weisen die Befestigungselemente von der Seitenwand abstehende federdelastische Bereiche auf, deren zur Frontseite weisende Stirnkanten zur Anlage an der Rückseite der Schalttafel ausgebildet sind.

Schließlich wird noch vorgeschlagen, daß das Befestigungselemente eine weitere Lasche aufweist, die sich an der Rückseite des frontseitigen Rands abstützt.

Das erfindungsgemäße Gehäuse hat den Vorteil, daß die Aufnahmen für die Befestigungselemente an das aus Kunststoff bestehende Gehäuse angeformt sind. Es kann auf die bisher erforderlichen zusätzlichen Verbindungselemente verzichtet werden. Außerdem sind die Aufnahmen der Befestigungselemente so ausgebildet, daß wahlweise solche Befestigungselemente verwendet werden können, die zur Befestigung des Gehäuses von der Schalttafelrückseite dienen oder solche Befestigungselemente, die zur Montage des Gehäuses von der Schalttafelfrontseite dienen.

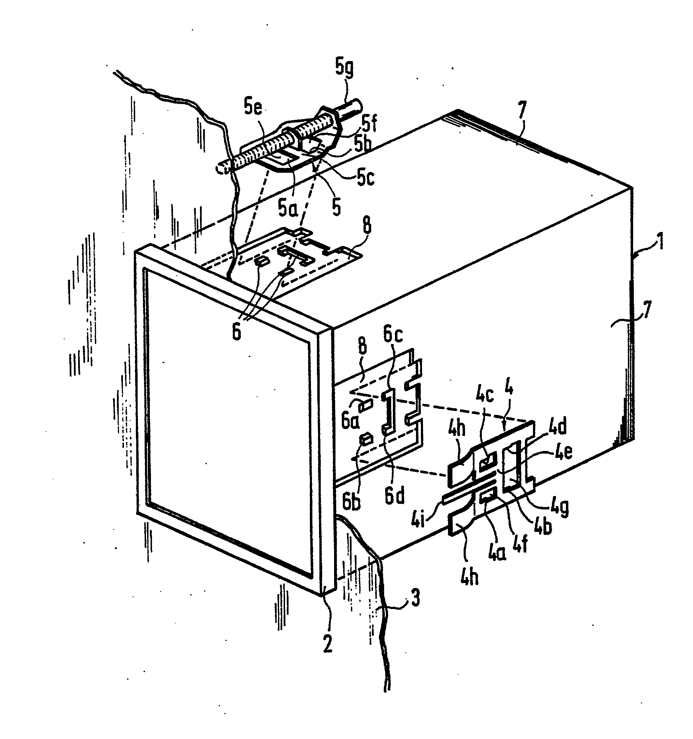

Nachstehend wird ein bevorzugtes Ausführungsbeispiel der Erfindung anhand der Zeichnung beschrieben. Die Zeichnung zeigt eine perspektivische Ansicht eines Gehäuses mit zwei unterschiedlichen Befestigungselementen in Explosionsdarstellung.

Das Gehäuse 1 besitzt Seitenwände 7, welche im Bereich des frontseitigen Abdeckrahmens 2 Ausnehmungen 8 besitzen. Der frontseitige Abdeckrahmen übergreift einen Ausschnitt in der Schalttafel 3 und den nicht dargestellten, den Ausschnitt ebenfalls übergreifenden Rand des Gehäuses.

In den Ausnehmungen 8 sind angeformte Vorsprünge 6 vorgesehen. Die Vorsprünge 6 besitzen konisch zum Grund der Ausnehmung 8 verlaufende hinterschnittene Bereiche 6a, 6b und 6c. Diese hinterschnittenen Bereiche korrespondieren mit entsprechenden Bereichen der Befestigungselemente und sichern die Befestigungselemente in ihrer Einbauposition.

Das Befestigungselement 4 dient zum Anbau an die Gehäuseseitenwand 7, wenn das Gehäuse für einen Einschub von der Frontseite der Schalttafel 3 verwendet werden soll. Das Befestigungselement 4 besitzt verschiedene Durchbrüche 4f und 4g, die durch Stege 4e voneinander getrennt sind. Die Durchbrüche besitzen geneigt angeordnete Seitenkantenbereiche 4a, 4b, 4c und 4d. Die Neigung und Anordnung der Seitenkantenbereiche ist so gewählt, daß diese zunächst in den erweiterten Bereichen der Durchbrüche über die Vorsprünge 6 geschoben und anschließend nach hinten geschoben werden können. Es werden dann die geneigten Seitenkantenbereiche des Befestigungselements 4 von den hinterschnittenen Bereichen 6a, 6b, 6c und 6d gehalten. Die verschiedenen Vorsprünge 6 dienen außerdem zur Fixierung des Befestigungselements 4 in der endgültigen Einschubposition.

Das Befestigungselement 4 besitzt zwei seitlich abgespreizte, zur Frontseite des Gehäuses weisende federnd elastische Bereiche 4h und einen ebenfalls zur Frontseite weisenden Bereich 4i. Der Bereich 4i liegt im montierten Zustand am Grund der Ausnehmung 8 an und stützt sich mit seiner Stirnseite an dem nicht sichtbaren Rand des Gehäuses 1 ab.

Mit Ausnahme der Laschen 4h liegen sämtliche übrigen Bereiche des Befestigungselements 4 innerhalb der Außenkontur der Seitenwand 7. Bei einer solchen Ausgestaltung genügt es also, den Ausschnitt in der Schalttafel 3 so zu bemessen, daß er dem Außenquerschnitt des Gehäuses entspricht.

An dem Gehäuse kann auch das mit 5 bezeichnete Befestigungselement fixiert werden. Es wirken dann die mit 5a und 5c bezeichneten Seitenkanten der Durchbrüche 5e und 5f mit den zugehörigen hinterschnittenen Bereichen der Vorsprünge 6 zusammen. Mit der Spindel 5g kann das Gehäuse 1 an der Rückseite der Schalttafel 3 abgestützt werden.

## Patentansprüche

1. Gehäuse (1) zum Einsetzen in Ausschnitte von Schalttafeln (3) oder dergleichen, mit einem frontseitigen, zum Übergreifen eines Ausschnitts ausgebildeten Rand, ferner mit seitlich am Gehäuse angesetzten, als Blechteile ausgebildeten Befestigungselementen (4; 5), die zum Abstützen an der Rückseite der Schalttafel oder dergleichen ausgebildet sind, dadurch gekennzeichnet, daß die Befestigungselemente (4; 5) geneigt angeordnete quer zur Frontseite des Gehäuses sich erstreckende Seitenkantenbereiche (4a, 4b, 4c; 5a; 5b) aufweisen, die entsprechend geneigte, hinterschnittene Bereiche (6b, 6d, 6a, 6c) der Gehäuseseitenwand (7) untergreifen und daran fixiert sind.

2. Gehäuse nach Anspruch 1, dadurch gekennzeichnet, daß in den Seitenwänden (7) gegenüber deren Außenkonturen zurückliegende Ausnehmungen (8) zur Aufnahme von Bereichen der Befestigungselemente (4; 5) vorgesehen sind.

3. Gehäuse nach Anspruch 1 oder 2, dadurch gekennzeichnet, daß diejenigen Bereiche der Befestigungselemente (4; 5) innerhalb der Außenkonturen der Seitenwände (7) liegen, mit denen die Befestigungselemente am Grund der Ausnehmungen (8) anliegen.

4. Gehäuse nach einem oder mehreren der Ansprüche 1 bis 3, dadurch gekennzeichnet, daß die Befestigungselemente durch Stege (4e; 5c) voneinander getrennte zentrale Durchbrüche (4f, 4g; 5e, 5f) aufweisen, die an vom Grund der Ausnehmungen (8) vorstehenden, angeformten Vorsprüngen (6) anliegen.

5. Gehäuse nach einem oder mehreren der Ansprüche 1 bis 4, dadurch gekennzeichnet, daß die Befestigungselemente (4) von der Seitenwand (7) abstehende, federnd elastische Bereiche (4h) aufweisen, deren zur Frontseite weisende Stirnkanten zur Anlage an der Rückseite der Schalttafel (3) ausgebildet sind.

6. Gehäuse nach Anspruch 5, dadurch gekennzeichnet, daß das Befestigungselement (4) eine weitere Lasche (4i) aufweist, die sich an der Rückseite des frontseitigen Rands abstützt.

## Claims

1. Housing (1) for insertion in cutouts of switchboards (3) or the same, having a rim at the front, which rim is designed to engage over a cutout, also having securing elements (4; 5) mounted laterally on the housing and designed as sheet-metal parts, which securing elements are designed to be supported on the rear of the switchboard or the same, characterized in that the securing elements (4; 5) have side edge regions (4a, 4b, 4c; 5a; 5b) arranged inclined and extending transversely to the front of the housing, which side edge regions engage under correspondingly inclined undercut regions (6b, 6d, 6a, 6c) of the housing side wall (7) and are fixed to them.

2. Housing according to claim 1, characterized in that set-back recesses (8) for receiving regions of the securing elements (4; 5) are provided in the side walls (7) opposite their outer contours.

3. Housing according to claim 1 or 2, characterized in that those regions of the securing elements (4; 5) with which the securing elements rest on the base of the recesses (8) lie within the outer contours of the side walls (7).

4. Housing according to one or more of claims 1 to 3, characterized in that the securing elements have central through-holes (4f, 4g; 5e, 5f) separated from one another by webs (4e; 5c), which through-holes rest on formed-on projections (6) protruding from the base of the recesses (8).

5. Housing according to one or more of claims 1 to 4, characterized in that the securing elements (4) have elastic regions (4h) sticking out from the side wall (7), the end edges of which elastic regions pointing towards the front are designed to rest on the rear of the switchboard (3).

6. Housing according to claim 5, characterized in that the securing element (4) has a further tab (4i) which is supported on the rear of the rim at the front.

## Revendications

1. Boîtier (1) à installer dans des découpes, pratiquées dans des tableaux électriques (3) ou analogues, équipé, côté frontal, d'un bord conçu pour embrasser, une découpure, et, en outre, d'éléments de fixation (4; 5), sous forme de pièces en tôle, raccordés latéralement au boîtier, s'appuyant à la partie arrière du panneau électrique ou analogue, caractérisé par le fait que les éléments de fixation (4; 5) présentent des arêtes latérales (4a, 4b, 4c; 5a, 5b) disposées obliquement, s'étendant transversalement par rapport à la partie frontale du boîtier et s'emboîtant sous des secteurs contre-dépouillés et adéquatement inclinés (6b, 6d, 6a, 6c) de la paroi latérale (7) du boîtier et y sont fixées.

2. Boîtier selon revendication 1, caractérisé par le fait que des cavités (8), pratiquées dans les parois latérales (7) en retrait de leurs contours, sont prévues en vue de recevoir des parties des éléments de fixation (4; 5).

3. Boîtier selon revendication 1 ou 2, caractérisé par le fait que les secteurs des éléments de fixation (4; 5), avec lesquels ces derniers portent sur le fond de la cavité (8), sont situés à l'intérieur des contours extérieurs des parois latérales (7).

4. Boîtier selon une ou plusieurs revendications de 1 à 3, caractérisé par le fait que les éléments de fixation présentent des percées centrales (4f, 4g; 5e, 5f), séparées les unes des autres par des ponts (4e; 5c), portant sur des saillies (6) moulées en prohéminence sur le fond des cavités (8).

5. Boîtier selon une ou plusieurs revendications de 1 à 4, caractérisé par le fait que les éléments de fixation (4) présentent des zones élastiques faisant ressort (4h) et s'écartant de la paroi latérale (7), zones élastiques dont les arêtes frontales, dirigées vers la partie frontale sont conçues en vue de permettre l'installation à la partie arrière du panneau électrique (3).

6. Boîtier selon revendication 5, caractérisé par le fait que l'élément de fixation (4) présente une éclisse supplémentaire (4i), s'étayant à la partie arrière du bord côté frontal.